# EUROPEAN PATENT APPLICATION

(11) **EP 3 346 158 A1**
(43) Date of publication of application: **11.07.2018**
(21) Application number: 16841916.6
(22) Date of filing: 31.08.2016
(51) Int. Cl.: F16F 9/508, F16F 9/32

(54) **SHOCK-ABSORBING DEVICE**

(30) Priority: 02.09.2015 JP 2015172503
(71) Applicant: KYB Corporation, Tokyo 105-6111 (JP)
(72) Inventor: CHIKAMATSU, Satoshi, Tokyo 105-6111 (JP)
(74) Representative: Grünecker Patent- und Rechtsanwälte PartG mbB
(86) International application number: PCT/JP2016/075538
(87) International publication number: WO 2017/038886

(57) **Abstract**

A shock absorber D includes an extension-side damping valve EV, which provides an extension-side damping force, a first bypass passage B1, which bypasses the extension-side damping valve EV, a first pressure chamber PR1, a first free piston F1, and a first spring S1, which are disposed in the first bypass passage B1, a contraction-side damping valve CV, which provides a contraction-side damping force, a second bypass passage B2, which bypasses the contraction-side damping valve CV, and a second pressure chamber PR2, a second free piston F2, and a second spring S2, which are disposed in the second bypass passage B2.

## Description

### TECHNICAL FIELD

The present invention relates to a shock absorber.

### BACKGROUND ART

A conventional shock absorber interposed between a vehicle body and axle shafts in a vehicle to suppress a vibration of the vehicle body includes a cylinder, a piston, a first flow passage, a second flow passage, a housing, a free piston, and a coiled spring. The piston is slidably inserted in the cylinder to partition an inside of the cylinder into an extension-side chamber in a side of a piston rod and a contraction-side chamber in a side of the piston. The first flow passage is disposed in the piston to allow communication between the extension-side chamber and the contraction-side chamber. The second flow passage opens in a distal end and a side surface of the piston rod to allow communication between the extension-side chamber and the contraction-side chamber. The housing is installed in the distal end of the piston rod and internally includes a pressure chamber connected to the second flow passage. The free piston is slidably inserted in the pressure chamber to partition the pressure chamber into an extension-side pressure chamber and a contraction-side pressure chamber. The coiled spring biases the free piston. In this shock absorber, a frequency sensitive unit is constituted of the pressure chamber, which allows communication between the extension-side chamber and the contraction-side chamber, the free piston, which is inserted in the pressure chamber, the spring, which biases the free piston. The frequency sensitive unit is disposed in parallel with the first flow passage disposed in the piston (for example, see JP2008-215459A).

In this shock absorber, the second flow passage does not directly allow communication between the extension-side chamber and the contraction-side chamber. However, as soon as the free piston moves, a volume ratio of the extension-side pressure chamber to the contraction-side pressure chamber changes to cause a liquid inside the pressure chamber to come in to and out of the extension-side chamber and the contraction-side chamber corresponding to a moving amount of the free piston. Therefore, the extension-side chamber directly communicates with the contraction-side chamber via the frequency sensitive unit in appearance.

When a vibration with a low frequency is input, a proportion of a flow rate that passes through the frequency sensitive unit decreases with respect to a flow rate that passes through the first flow passage; therefore, the shock absorber generates a high damping force. On the other hand, when a vibration with a high frequency is input, a proportion of a flow rate that passes through the frequency sensitive unit increases with respect to a flow rate that passes through the first flow passage; therefore, the shock absorber generates a low damping force. That is, in this shock absorber, the damping force when the high frequency vibration is input can be reduced.

### SUMMARY OF INVENTION

In the shock absorber having the above-described configuration, the frequency sensitive unit is disposed in parallel with the first flow passage that provides a resistance not only to a flow of the liquid heading for the contraction-side chamber from the extension-side chamber, but also to a flow of the liquid heading for the extension-side chamber from the contraction-side chamber. In view of this, the damping force is reduced both in extension and contraction.

However, in a twin-tube shock absorber in which a base valve is disposed between the contraction-side chamber and a reservoir, causing the liquid to move through the frequency sensitive unit can bypass the first flow passage disposed in the piston, however, cannot bypass a flow passage disposed in the base valve. That is, a flow rate that flows out and in through the base valve cannot be decreased.

Thus, in the shock absorber including the base valve, the damping force is less likely to be reduced in contraction by the input of the high frequency vibration to possibly decrease a reduction quantity of a contraction-side damping force.

An object of the present invention is to provide a shock absorber that ensures obtaining a sufficient damping force reduction effect when the shock absorber contracts by an input of a high frequency vibration.

According to one aspect of the present invention, a shock absorber is provided. The shock absorber includes: a cylinder; a reservoir; a separating member that defines an operation chamber in the cylinder, the separating member separating the operation chamber from the reservoir; a piston movably inserted in the cylinder to partition the operation chamber into an extension-side chamber and a contraction-side chamber; an extension-side damping valve configured to provide a resistance to a flow of a liquid heading for the contraction-side chamber from the extension-side chamber; a first bypass passage configured to bypass the extension-side damping valve; a first pressure chamber disposed in a middle of the first bypass passage; a first free piston movably inserted in the first pressure chamber; a first spring configured to bias the first free piston; a contraction-side damping valve configured to provide a resistance to a flow of the liquid heading for the reservoir from the contraction-side chamber; a second bypass passage configured to bypass the contraction-side damping valve; a second pressure chamber disposed in a middle of the second bypass passage; a second free piston movably inserted in the second pressure chamber; and a second spring configured to bias the second free piston.

### BRIEF DESCRIPTION OF DRAWINGS

FIG. 1 is a schematic cross-sectional view of a shock absorber according to a first embodiment of the present invention.
FIG. 2 is a drawing illustrating an example of a specific structure of an orifice (a first valve element) and a first check valve.
FIG. 3 is a drawing illustrating an example of a specific structure of an orifice (a second valve element) and a second check valve.
FIG. 4 is a Bode diagram illustrating a gain characteristic of a frequency transfer function of a pressure with respect to a flow rate.
FIG. 5 is a drawing illustrating a damping force characteristic with respect to a vibration frequency of the shock absorber.
FIG. 6 is a schematic cross-sectional view of the shock absorber according to a second embodiment of the present invention.
FIG. 7 is a schematic cross-sectional view of a modification of the shock absorber according to the second embodiment of the present invention.

### DESCRIPTION OF EMBODIMENTS

The following describes embodiments of the present invention with reference to attached drawings.

### <First Embodiment>

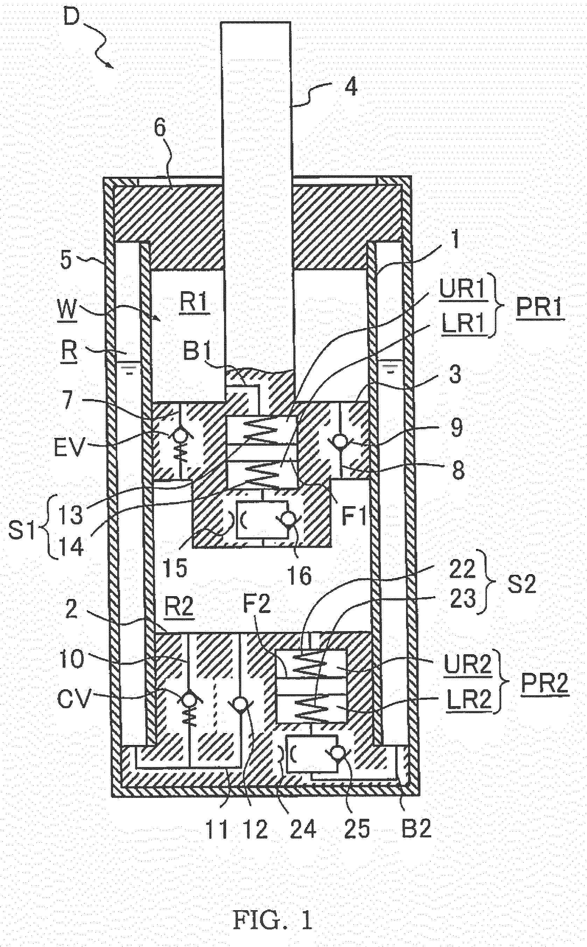

As illustrated in FIG. 1, a shock absorber D according to a first embodiment of the present invention includes a cylinder 1, a reservoir R, a separating member 2, a piston 3, an extension-side damping valve EV, a first bypass passage B1, a first pressure chamber PR1, a first free piston F1, a first spring S1, a contraction-side damping valve CV, a second bypass passage B2, a second pressure chamber PR2, a second free piston F2, and a second spring S2. The separating member 2 defines an operation chamber W in the cylinder 1 and separates the operation chamber W from the reservoir R. The piston 3 is movably inserted in the cylinder 1 to partition the operation chamber W into an extension-side chamber R1 and a contraction-side chamber R2. The extension-side damping valve EV provides a resistance to a flow of a liquid heading for the contraction-side chamber R2 from the extension-side chamber R1. The first bypass passage B1 bypasses the extension-side damping valve EV. The first pressure chamber PR1 is disposed in a middle of the first bypass passage B1. The first free piston F1 is movably inserted in the first pressure chamber PR1. The first spring S1 biases the first free piston F1. The contraction-side damping valve CV provides a resistance to a flow of the liquid heading for the reservoir R from the contraction-side chamber R2. The second bypass passage B2 bypasses the contraction-side damping valve CV. The second pressure chamber PR2 is disposed in a middle of the second bypass passage B2. The second free piston F2 is movably inserted in the second pressure chamber PR2. The second spring S2 biases the second free piston F2. This shock absorber D is applied for a vehicular suspension and is interposed between a vehicle body and axle shafts in a vehicle to suppress a vibration of the vehicle body by generating a damping force. It should be noted that the extension-side chamber R1 is a chamber compressed when the shock absorber D performs an extension operation and the contraction-side chamber R2 is a chamber compressed when the shock absorber D performs a contraction operation. Then, in the extension-side chamber R1, the contraction-side chamber R2, the first pressure chamber PR1, and the second pressure chamber PR2, a liquid, such as a hydraulic oil, is filled. In the reservoir R, the liquid and a gas are filled. It should be noted that as the liquid filled in the extension-side chamber R1, the contraction-side chamber R2, the first pressure chamber PR1, the second pressure chamber PR2, and the reservoir R, a liquid other than the hydraulic oil may be used, and a liquid, such as a water and a water solution, may be used.

The cylinder 1 is inserted in an outer pipe 5 in a shape of a cylinder with a closed bottom. Between the outer pipe 5 and the cylinder 1, a ring-shaped clearance is formed. The ring-shaped clearance is used as the reservoir R. The piston 3 is coupled to one end of a piston rod 4 movably inserted in the cylinder 1. The other end of the piston rod 4 projects outward from an upper end portion of the cylinder 1 in the drawing.

Upper ends of the cylinder 1 and the outer pipe 5 are obstructed with a ring-shaped rod guide 6. The rod guide 6 supports the piston rod 4 internally inserted movably in an axial direction. A lower end of the cylinder 1 is obstructed with the separating member 2. The separating member 2 separates the operation chamber W from the reservoir R in the cylinder 1. It should be noted that seals (not illustrated) are disposed between the piston rod 4 and the rod guide 6, between the cylinder 1 and the rod guide 6, and between the outer pipe 5 and the rod guide 6 to seal insides of the cylinder 1 and the outer pipe 5.

Then, the piston 3 inserted in the cylinder 1 is slidably in contact with an inner periphery of the cylinder 1 and partitions the operation chamber W in the cylinder 1 into the extension-side chamber R1 in an upper side and the contraction-side chamber R2 in a lower side in FIG. 1.

The piston 3 includes an extension-side passage 7 and a contraction-side passage 8 that allow communication between the extension-side chamber R1 and the contraction-side chamber R2. The extension-side passage 7 includes the extension-side damping valve EV. The extension-side damping valve EV is configured to allow only the flow of the liquid heading for the contraction-side chamber R2 from the extension-side chamber R1 and provide a resistance to this flow. While the extension-side damping valve EV is a one-way valve that blocks a flow of the liquid heading for the extension-side chamber R1 from the contraction-side chamber R2, the extension-side damping valve EV may be, for example, a throttle valve that allows the flows in both the directions, or may be, for example, a well-known configuration that combines an orifice and a leaf valve. The contraction-side passage 8 includes a contraction-side check valve 9. The contraction-side check valve 9 is configured to allow only the flow of the liquid heading for the extension-side chamber R1 from the contraction-side chamber R2. It should be noted that while being disposed in the piston 3, the extension-side passage 7, the contraction-side passage 8, the extension-side damping valve EV, and the contraction-side check valve 9 may be disposed in another member as long as having identical functions.

The separating member 2 includes a discharge passage 10 and a suction passage 11 that allow communication between the contraction-side chamber R2 and the reservoir R. The discharge passage 10 includes the contraction-side damping valve CV. The contraction-side damping valve CV is configured to allow only the flow of the liquid heading for the reservoir R from the contraction-side chamber R2 and provide a resistance to this flow. While the contraction-side damping valve CV is a one-way valve that blocks a flow of the liquid heading for the contraction-side chamber R2 from the reservoir R, the contraction-side damping valve CV may be, for example, a throttle valve that allows the flows in both the directions, or may be, for example, a well-known configuration that combines an orifice and a leaf valve. The suction passage 11 includes a check valve for suction 12. The check valve for suction 12 is configured to allow only the flow of the liquid heading for the contraction-side chamber R2 from the reservoir R. It should be noted that while being disposed in the separating member 2, the discharge passage 10, the suction passage 11, the contraction-side damping valve CV, and the check valve for suction 12 may be disposed in another member as long as having identical functions.

Thus, the shock absorber D is set to be what is called a single-rod type. In view of this, the hydraulic oil having a volume of the piston rod 4, which comes in to and out of the cylinder 1 in accordance with extension and contraction of the shock absorber D, is supplied and drained by the reservoir R, thus compensating a volume change. It should be noted that while being constituted of the ring-shaped clearance formed between the cylinder 1 and the outer pipe 5, instead of this, the reservoir R may be constituted of a tank separately disposed from the cylinder 1.

The first bypass passage B1 is disposed in parallel with the extension-side passage 7 in the piston 3. The first bypass passage B1 has one end opening in the extension-side chamber R1 and the other end opening in the contraction-side chamber R2. That is, the first bypass passage B1 bypasses the extension-side damping valve EV and allows communication between the extension-side chamber R1 and the contraction-side chamber R2.

In the middle of the first bypass passage B1, the first pressure chamber PR1 is disposed. Specifically, the first pressure chamber PR1 is internally formed in the piston 3 using the piston 3 as a housing. It should be noted that the first pressure chamber PR1 may be disposed in the piston rod 4. The first pressure chamber PR1 may be disposed in a piston nut (not illustrated) screwed in a distal end of the piston rod 4 to fix the piston 3 to the piston rod 4.

In the first pressure chamber PR1, the first free piston F1 is inserted slidably in an up and down direction in FIG. 1. The first free piston F1 partitions the first pressure chamber PR1 into a first upper chamber UR1 that communicates with the extension-side chamber R1 and a first lower chamber LR1 that communicates with the contraction-side chamber R2. The first free piston F1 is displaceable in the first pressure chamber PR1 in the up and down direction in FIG. 1.

The first upper chamber UR1 and the first lower chamber LR1 house a pair of springs 13 and 14 as the first spring S1 that position the first free piston F1 in a neutral position. That is, the first free piston F1 is in a state of being interposed between the pair of springs 13 and 14. As soon as the first free piston F1 displaces from the neutral position, the first spring S1 generates a biasing force in a direction to return the first free piston F1 to the neutral position corresponding to the displacement amount. The neutral position is a position of the first free piston F1 positioned by the first spring S1 with respect to the first pressure chamber PR1. As soon as the first free piston F1 displaces to a side of the first lower chamber LR1, the liquid moves to the first upper chamber UR1 from the extension-side chamber R1 and the liquid moves to the contraction-side chamber R2 from the first lower chamber LR1. Thus, in appearance, a part of the liquid in the extension-side chamber R1 bypasses the extension-side damping valve EV and flows to the contraction-side chamber R2 through the first bypass passage B1. That is, the larger a stroke amount of the first free piston F1 to the first lower chamber LR1 side is when the shock absorber D is in the extension operation, the more the flow rate of the liquid that bypasses the extension-side damping valve EV becomes. In view of this, in order to increase the flow rate of the liquid that bypasses the extension-side damping valve EV, it is only necessary to set the neutral position as up as possible in FIG. 1.

When the shock absorber D is in the contraction operation, the contraction-side check valve 9 opens and the liquid can move to the extension-side chamber R1 from the contraction-side chamber R2 with little resistance; therefore, the extension-side chamber R1 and the contraction-side chamber R2 have approximately identical pressures. Accordingly, even though the first free piston F1 displaces to a side of the first upper chamber UR1 in the contraction operation, a differential pressure is hardly generated between the extension-side chamber R1 and the contraction-side chamber R2; therefore, it is not necessary to cause the liquid to actively flow in the first bypass passage B1 in the contraction operation. Accordingly, while the first spring S1 is constituted of the pair of springs 13 and 14, since the first spring S1 is only necessary to provide the biasing force to suppress the displacement of the first free piston F1 to the first lower chamber LR1 side, the first spring S1 may be constituted of one spring.

It should be noted that the first free piston F1 is configured to move in the first pressure chamber PR1 in the up and down direction in FIG. 1. The moving direction of the first free piston F1 corresponds to a vibration direction in which the shock absorber D extends and contracts. It should be noted that in order to prevent the vibration of the whole shock absorber D in the up and down direction in FIG. 1 from causing the first free piston F1 to vibrate in the up and down direction, it is only necessary to set the moving direction of the first free piston F1 to be perpendicular to the extension and contraction direction of the shock absorber D.

In a middle of the first bypass passage B1, an orifice 15 and a first check valve 16 are disposed. The orifice 15 is as a first valve element that provides a resistance to the flow of the liquid heading for the contraction-side chamber R2 from the extension-side chamber R1. The first check valve 16 is disposed in parallel with the orifice 15 and allows only the flow of the liquid heading for the extension-side chamber R1 from the contraction-side chamber R2. Accordingly, when the shock absorber D extends and the liquid moves in the first bypass passage B1 from the extension-side chamber R1 to the contraction-side chamber R2, the orifice 15 provides the resistance to the flow of the liquid. In contrast, when the shock absorber D contracts and the liquid moves in the first bypass passage B1 from the contraction-side chamber R2 to the extension-side chamber R1, the first check valve 16 opens and provides little resistance to the flow of the liquid. Accordingly, when the first free piston F1 displaces to the first lower chamber LR1 side, the orifice 15 provides the resistance to the flow of the liquid; therefore, the displacement of the first free piston F1 is suppressed. On the other hand, when the first free piston F1 displaces to the first upper chamber UR1 side, the first check valve 16 opens and the liquid bypasses the orifice 15 and preferentially passes through the first check valve 16; therefore, the displacement of the first free piston F1 is not restricted and promptly displaced. It should be noted that the first valve element may be a choke or another valve member that provides a resistance or may be a variable orifice. The orifice 15 and the first check valve 16 may be disposed in a side of the extension-side chamber R1 with respect to the first pressure chamber PR1 of the first bypass passage B1 or may be disposed in a side of the contraction-side chamber R2.

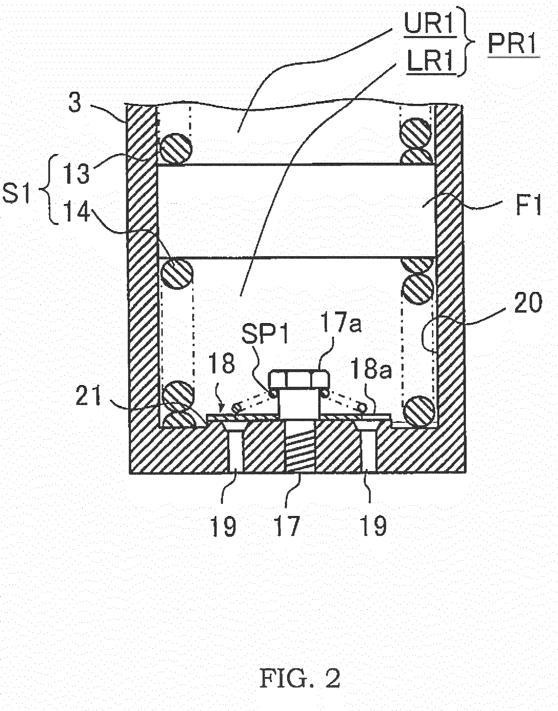

Next, with reference to FIG. 2, specific configurations of the orifice 15 and the first check valve 16 will be described. The orifice 15 and the first check valve 16 are constituted of a disk valve 18, a conical spring SP1, and ports 19. The disk valve 18 is a ring-shaped member installed movably in the axial direction on an outer periphery of a shaft member 17 screwed to the piston 3 and includes a cutout 18a that serves as an orifice on an outer periphery. The conical spring SP1 is interposed between a head 17a of the shaft member 17 and the disk valve 18 to biases the disk valve 18 toward the piston 3. The ports 19 are formed in the piston 3 and opened and closed with the disk valve 18. The ports 19 constitute a part of the first bypass passage B1. The disk valve 18 is housed in a hollow portion 20 that forms the first pressure chamber PR1. The disk valve 18 opens and closes the ports by separating from and seating on a valve seat 21 in a ring shape disposed on outer peripheries of the ports 19 that communicate with the hollow portion 20. When a pressure in the first pressure chamber PR1 is higher than a pressure in the contraction-side chamber R2, the ports 19 are in a closed state with the disk valve 18; therefore, the liquid passes through only the cutout 18a to move from the first pressure chamber PR1 to the contraction-side chamber R2. In contrast, when the pressure in the contraction-side chamber R2 is higher than the pressure of the first pressure chamber PR1, the disk valve 18 is pressed up by the pressure in the contraction-side chamber R2 to compress the conical spring SP1. Then, the disk valve 18 moves upward in FIG. 2 so as to separate from the valve seat 21, and the ports 19 are opened. The liquid moves to the first pressure chamber PR1 from the contraction-side chamber R2 through the opened ports 19. Thus, the cutout 18a serves as the orifice 15 and the disk valve 18 serves as the first check valve 16. Since the disk valve 18 is housed in the piston 3, the disk valve 18 can avoid an interference with other members that constitute the shock absorber D. The disk valve 18, which closes the ports 19, is biased by the conical spring SP1. In view of this, in comparison with a check valve having a configuration where an inner periphery of the disk valve 18 is secured by the shaft member 17 and a deflection of the outer periphery of the disk valve 18 opens the ports 19, a valve opening pressure can be lowered to ensure a considerably small resistance when the liquid passes. It should be noted that, instead of the cutout 18a formed on the outer periphery of the disk valve 18, the orifice 15 may be, for example, a cutout disposed in the valve seat 21, which the disk valve 18 separates from and seats on. When the first pressure chamber PR1 is disposed in the piston rod 4 or the piston nut, the disk valve 18, the ports 19, and the valve seat 21 are also disposed in the piston rod 4 or the piston nut similarly.

As illustrated in FIG. 1, the second bypass passage B2 is disposed in parallel with the discharge passage 10 in the separating member 2. The second bypass passage B2 has one end opening in the contraction-side chamber R2 and the other end opening in the reservoir R. That is, the second bypass passage B2 bypasses the contraction-side damping valve CV and allows communication between the contraction-side chamber R2 and the reservoir R.

In the second pressure chamber PR2, which is disposed in the middle of the second bypass passage B2, the second free piston F2 is inserted slidably in the up and down direction in FIG. 1. The second free piston F2 partitions the second pressure chamber PR2 into a second upper chamber UR2 that communicates with the contraction-side chamber R2 and a second lower chamber LR2 that communicates with the reservoir R. The second free piston F2 is displaceable in the up and down direction in FIG. 1 in the second pressure chamber PR2.

The second upper chamber UR2 and the second lower chamber LR2 house a pair of springs 22 and 23 as the second spring S2 that position the second free piston F2 in a neutral position. That is, the second free piston F2 is in a state of being interposed between the pair of springs 22 and 23. As soon as the second free piston F2 displaces from the neutral position, the second spring S2 generates a biasing force in a direction to return the second free piston F2 to the neutral position corresponding to the displacement amount. The neutral position is a position of the second free piston F2 positioned by the second spring S2 with respect to the second pressure chamber PR2. As soon as the second free piston F2 displaces to a side of the second lower chamber LR2, the liquid moves to the second upper chamber UR2 from the contraction-side chamber R2 and the liquid moves to the reservoir R from the second lower chamber LR2. Thus, in appearance, a part of the liquid in the contraction-side chamber R2 bypasses the contraction-side damping valve CV and flows to the reservoir R through the second bypass passage B2. That is, the larger a stroke amount of the second free piston F2 to the second lower chamber LR2 side is when the shock absorber D is in the contraction operation, the more the flow rate of the liquid that bypasses the contraction-side damping valve CV becomes. In view of this, in order to increase the flow rate of the liquid that bypasses the contraction-side damping valve CV, it is only necessary to set the neutral position as up as possible in FIG. 1.

When the shock absorber D is in the extension operation, the check valve for suction 12 opens and the liquid can move to the contraction-side chamber R2 from the reservoir R with little resistance; therefore, the contraction-side chamber R2 and the reservoir R have approximately identical pressures. Accordingly, even though the second free piston F2 displaces to a side of the second upper chamber UR2 in the extension operation, a differential pressure is hardly generated between the contraction-side chamber R2 and the reservoir R; therefore, it is not necessary to cause the liquid to actively flow in the second bypass passage B2 in the extension operation. Accordingly, while the second spring S2 is constituted of the pair of springs 22 and 23, since the second spring S2 is only necessary to provide the biasing force to suppress the displacement of the second free piston F2 to the second lower chamber LR2 side, the second spring S2 may be constituted of one spring.

It should be noted that the second free piston F2 is configured to move in the second pressure chamber PR2 in the up and down direction in FIG. 1. The moving direction of the second free piston F2 corresponds to the vibration direction in which the shock absorber D extends and contracts. It should be noted that in order to prevent the vibration of the whole shock absorber D in the up and down direction in FIG. 1 from causing the second free piston F2 to vibrate in the up and down direction, it is only necessary to set the moving direction of the second free piston F2 to be perpendicular to the extension and contraction direction of the shock absorber D.

In a middle of the second bypass passage B2, an orifice 24 and a second check valve 25 are disposed. The orifice 24 is as a second valve element that provides a resistance to the flow of the liquid heading for the reservoir R from the contraction-side chamber R2. The second check valve 25 is disposed in parallel with the orifice 24 and allows only the flow of the liquid heading for the contraction-side chamber R2 from the reservoir R. Accordingly, when the shock absorber D contracts and the liquid moves in the second bypass passage B2 from the contraction-side chamber R2 to the reservoir R, the orifice 24 provides a resistance to the flow of the liquid. In contrast, when the shock absorber D extends and the liquid moves in the second bypass passage B2 from the reservoir R to the contraction-side chamber R2, the second check valve 25 opens and provides little resistance to the flow of the liquid. Accordingly, when the second free piston F2 displaces to the second lower chamber LR2 side, the orifice 24 provides the resistance to the flow of the liquid; therefore, the displacement of the second free piston F2 is suppressed. On the other hand, when the second free piston F2 displaces to the second upper chamber UR2 side, the second check valve 25 opens and the liquid bypasses the orifice 24 and preferentially passes through the second check valve 25; therefore, the displacement of the second free piston F2 is not suppressed and promptly displaced. It should be noted that the second valve element may be a choke or another valve member that provides a resistance or may be a variable orifice. The orifice 24 and the second check valve 25 may be disposed in a side of the contraction-side chamber R2 with respect to the second pressure chamber PR2 of the second bypass passage B2 or may be disposed in a side of the reservoir R.

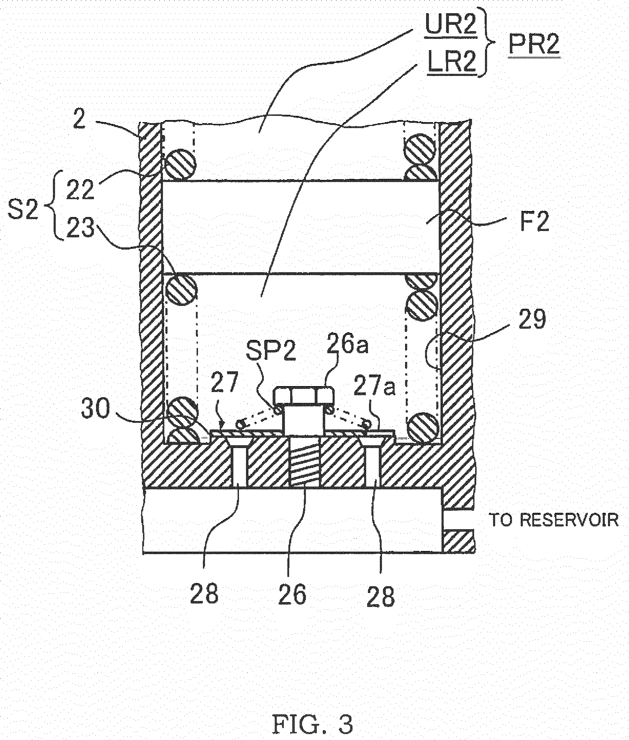

Next, with reference to FIG. 3, specific configurations of the orifice 24 and the second check valve 25 will be described. The orifice 24 and the second check valve 25 are constituted of a disk valve 27, a conical spring SP2, and ports 28. The disk valve 27 is a ring-shaped member installed movably in the axial direction on an outer periphery of a shaft member 26 screwed to the separating member 2 and includes a cutout 27a that serves as an orifice on an outer periphery. The conical spring SP2 is interposed between a head 26a of the shaft member 26 and the disk valve 27 to biases the disk valve 27 toward the separating member 2. The ports 28 are formed in the separating member 2 and opened and closed with the disk valve 27. The ports 28 constitute a part of the second bypass passage B2. The disk valve 27 is housed in a hollow portion 29 that forms the second pressure chamber PR2. The disk valve 27 opens and closes the ports by separating from and seating on a valve seat 30 in a ring shape disposed on outer peripheries of the ports 28 that communicate with the hollow portion 29. When a pressure in the second pressure chamber PR2 is higher than a pressure in the reservoir R, the ports 28 are in a closed state with the disk valve 27; therefore, the liquid passes through only the cutout 27a and moves from the second pressure chamber PR2 to the reservoir R. In contrast, when the pressure in the reservoir R is higher than the pressure of the second pressure chamber PR2, the disk valve 27 is pressed up by the pressure in the reservoir R to compress the conical spring SP2. Then, the disk valve 27 moves upward in FIG. 3 so as to separate from the valve seat 30, and the ports 28 are opened. The liquid moves to the second pressure chamber PR2 from the reservoir R through the opened ports 28. Thus, the cutout 27a serves as the orifice 24 and the disk valve 27 serves as the second check valve 25. Since the disk valve 27 is housed in the separating member 2, the disk valve 27 can avoid an interference with other members that constitute the shock absorber D. The disk valve 27, which closes the ports 28, is biased by the conical spring SP2. In view of this, in comparison with a check valve having a configuration where an inner periphery of the disk valve 27 is secured by the shaft member 26 and a deflection of the outer periphery of the disk valve 27 opens the ports 28, a valve opening pressure can be lowered to ensure a considerably small resistance when the liquid passes. It should be noted that, instead of the cutout 27a formed on the outer periphery of the disk valve 27, the orifice 24 may be, for example, a cutout disposed in the valve seat 30, which the disk valve 27 separates from and seats on.

Next, an operation of the shock absorber D will be described. As soon as the shock absorber D is in a state of the extension operation where the piston 3 moves upward in FIG. 1 with respect to the cylinder 1, the piston 3 compresses the extension-side chamber R1 and the contraction-side chamber R2 is enlarged. While the liquid attempts to move to the contraction-side chamber R2, which is enlarged, from the extension-side chamber R1, which is compressed, the extension-side damping valve EV provides the resistance and the pressure in the extension-side chamber R1 increases. At this time, since the piston rod 4 moves out of an inside of the cylinder 1, the liquid of the moved out volume of the piston rod 4 is in a short state even though the liquid moves to the contraction-side chamber R2 from the extension-side chamber R1. The liquid of this shortage amount is supplied to the contraction-side chamber R2 from the reservoir R. Accordingly, the pressure in the contraction-side chamber R2 approximately becomes the reservoir pressure. Thus, when a difference is generated between the pressures in the extension-side chamber R1 and the contraction-side chamber R2, the differential pressure becomes a damping force in a direction to press down the piston 3 downward in FIG. 1. As a result, the shock absorber D provides an extension-side damping force, which prevents the extension operation. When the difference is generated between the pressures in the extension-side chamber R1 and the contraction-side chamber R2, the first free piston F1 is pressed and displaced by the pressure in the first upper chamber UR1 into which the liquid in the extension-side chamber R1 is guided. The first free piston F1 displaces downward in FIG. 1 until a force downward in FIG. 1 by the pressure in the first upper chamber UR1 and a resultant force between a force upward in FIG. 1 by the pressure in the first lower chamber LR1 and an upward force of the first spring S1 generated by the displacement of the first free piston F1 are balanced. When the first free piston F1 is displaced, it is regarded that the liquid of an amount by multiplying the displacement amount by a cross-sectional area of the first free piston F1 bypasses the extension-side damping valve EV and moves to the contraction-side chamber R2 from the extension-side chamber R1 through the first bypass passage B1. The larger a ratio of the flow rate regarded to have passed through the first bypass passage B1 by bypassing the extension-side damping valve EV to the flow rate that passes through the extension-side damping valve EV is, the smaller the extension-side damping force becomes.

In contrast, as soon as the shock absorber D is in a state of the contraction operation where the piston 3 moves downward in FIG. 1 with respect to the cylinder 1, the piston 3 compresses the contraction-side chamber R2 and the extension-side chamber R1 is enlarged. While the liquid moves to the extension-side chamber R1 from the contraction-side chamber R2, which is compressed, through the contraction-side check valve 9, the piston rod 4 moves into the cylinder 1 and the liquid of the moved in volume of the piston rod 4 is excessive. The liquid of this excessive amount is discharged to the reservoir R through the contraction-side damping valve CV. Accordingly, the pressures (the pressure in the cylinder) in the extension-side chamber R1 and the contraction-side chamber R2 approximately are equal pressures, however, the contraction-side damping valve CV provides the resistance to the flow of the liquid moving to the reservoir R from the cylinder 1; therefore, the pressure in the cylinder increases. Thus, even though the pressures in the extension-side chamber R1 and the contraction-side chamber R2 are the equal pressures, the increased pressure in the cylinder causes a damping force in a direction to press up the piston 3 upward in FIG. 1. As a result, the shock absorber D provides a contraction-side damping force, which prevents the contraction operation. When the difference is generated between the pressures in the contraction-side chamber R2 and the reservoir R, the second free piston F2 is pressed and displaced by the pressure in the second upper chamber UR2 into which the liquid in the contraction-side chamber R2 is guided. The second free piston F2 displaces downward in FIG. 1 until a force downward in FIG. 1 by the pressure in the second upper chamber UR2 and a resultant force between a force upward in FIG. 1 by the pressure in the second lower chamber LR2 and an upward force of the second spring S2 generated by the displacement of the second free piston F2 are balanced. When the second free piston F2 is displaced, it is regarded that the liquid of an amount by multiplying the displacement amount by a cross-sectional area of the second free piston F2 bypasses the contraction-side damping valve CV and moves to the reservoir R from the contraction-side chamber R2 through the second bypass passage B2. The larger a ratio of the flow rate regarded to have passed through the second bypass passage B2 by bypassing the contraction-side damping valve CV to the flow rate that passes through the contraction-side damping valve CV is, the smaller the contraction-side damping force becomes.

Here, in a case where a piston speed of the shock absorber D is identical regardless of a frequency of the extension and contraction of the shock absorber D being a low frequency or a high frequency, an amplitude of the shock absorber D when the low frequency vibration is input becomes larger than an amplitude when the high frequency vibration is input. Thus, when the frequency of the vibration input to the shock absorber D is low, the amplitude is large; therefore, the flow rate of the liquid that comes and goes between the extension-side chamber R1 and the contraction-side chamber R2 increases in one cycle of extension and contraction. Then, the displacement of the first free piston F1 to the first lower chamber LR1 side in an extension stroke and the displacement of the second free piston F2 to the second lower chamber LR2 side in a contraction stroke increase in approximately proportion to the flow rate of the liquid that comes and goes between the extension-side chamber R1 and the contraction-side chamber R2.

The first free piston F1 is biased by the first spring S1. The larger the displacement of the first free piston F1 is, the larger the biasing force that the first free piston F1 receives from the first spring S1 becomes. That is, the larger the displacement of the first free piston F1 is, the larger the differential pressure between the first upper chamber UR1 and the first lower chamber LR1 becomes, however, the differential pressure between the extension-side chamber R1 and the first upper chamber UR1 and the differential pressure between the contraction-side chamber R2 and the first lower chamber LR1 decrease; therefore, the flow rate of the liquid that passes through the first bypass passage B1 in appearance gradually decreases. Thus, the less the flow rate that passes through the first bypass passage B1 is, the larger the flow rate of the liquid that passes through the extension-side damping valve EV relatively becomes, thus increasing the extension-side damping force that the shock absorber D generates. In contrast, the more the flow rate that passes through the first bypass passage B1 is, the less the flow rate of the liquid that passes through the extension-side damping valve EV relatively becomes, thus reducing and decreasing the extension-side damping force that the shock absorber D generates.

Similarly, the second free piston F2 is biased by the second spring S2. The larger the displacement of the second free piston F2 is, the larger the biasing force that the second free piston F2 receives from the second spring S2 becomes. That is, the larger the displacement of the second free piston F2 is, the larger the differential pressure between the second upper chamber UR2 and the second lower chamber LR2 becomes, however, the differential pressure between the contraction-side chamber R2 and the second upper chamber UR2 and the differential pressure between the reservoir R and the second lower chamber LR2 decrease; therefore, the flow rate of the liquid that passes through the second bypass passage B2 in appearance gradually decreases. Thus, the less the flow rate that passes through the second bypass passage B2 is, the larger the flow rate of the liquid that passes through the contraction-side damping valve CV relatively becomes, thus increasing the contraction-side damping force that the shock absorber D generates. In contrast, the more the flow rate that passes through the second bypass passage B2 is, the less the flow rate of the liquid that passes through the contraction-side damping valve CV relatively becomes, thus reducing and decreasing the contraction-side damping force that the shock absorber D generates.

That is, the lower the extension and contraction frequency of the shock absorber D is, the larger the amplitude of the first free piston F1 and the second free piston F2 is, however, the flow rate of the liquid that passes through the first bypass passage B1 and the second bypass passage B2 is in a decreased state compared with the flow rate that passes through the extension-side damping valve EV and the contraction-side damping valve CV. In contrast, the higher the extension and contraction frequency of the shock absorber D is, the smaller the amplitude of the first free piston F1 and the second free piston F2 is, however, the flow rate of the liquid that passes through the first bypass passage B1 and the second bypass passage B2 is in an increased state compared with the flow rate that passes through the extension-side damping valve EV and the contraction-side damping valve CV. Accordingly, the lower the frequency of the vibration input to the shock absorber D is, the larger the damping force provided by the shock absorber D becomes, and the higher the frequency is, the smaller the damping force provided by the shock absorber D becomes due to a damping force reduction effect.

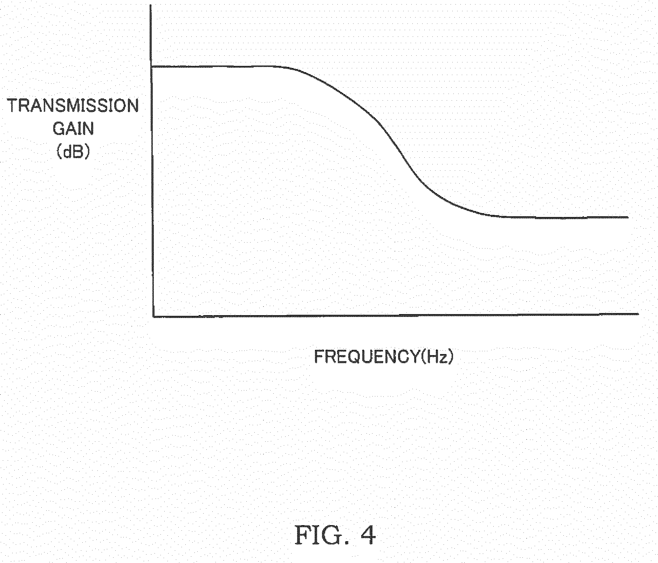

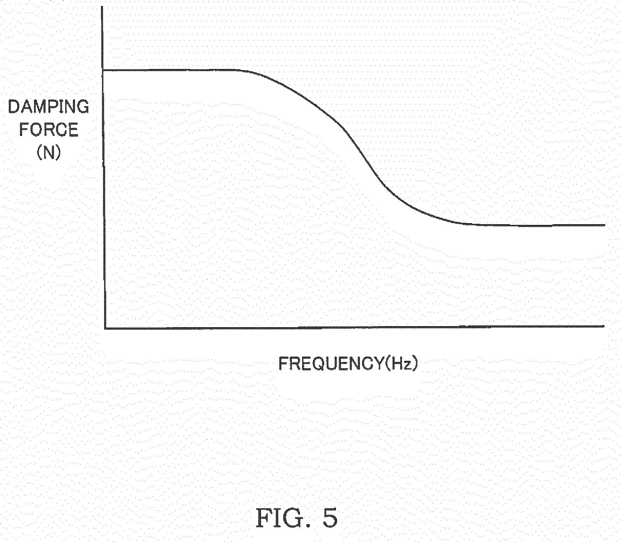

Then, a gain characteristic for a frequency of a frequency transfer function of the differential pressure between the extension-side chamber R1 and the contraction-side chamber R2 with respect to the flow rate of the liquid that moves to the contraction-side chamber R2 from the extension-side chamber R1 in extension and contraction has a characteristic as illustrated in FIG. 4. A gain characteristic for a frequency of a frequency transfer function of the differential pressure between the contraction-side chamber R2 and the reservoir R with respect to the flow rate of the liquid that moves to the reservoir R from the contraction-side chamber R2 also has a similar characteristic. As illustrated in FIG. 5, a characteristic of the damping force of the shock absorber D that indicates a gain of the damping force with respect to the input of the vibration frequency can generate the large damping force with respect to the vibration in a low frequency range and decrease the damping force with respect to the vibration in a high frequency range, thus ensuring changing the damping force corresponding to the vibration frequency input to the shock absorber D. In the shock absorber D, the liquid can bypass the extension-side damping valve EV and pass through the first bypass passage B1, and bypass the contraction-side damping valve CV and pass through the second bypass passage B2, thereby ensuring sufficiently providing the damping force reduction effect even in the contraction operation. Adjusting the break frequency in the damping force characteristic in FIG. 5 ensures the shock absorber D generating the high damping force with respect to the input of the vibration with a resonance frequency of sprung mass, thereby stabilizing a posture of the vehicle not to cause a passenger to feel anxiety when the vehicle turns. The shock absorber D provides the low damping force when the vibration with an unsprung resonance frequency is input and insulates a transmission of vibration on an axle shaft side to a vehicle body side, thereby ensuring a satisfactory ride quality in the vehicle. It should be noted that setting of a damping force characteristic in the extension side of the shock absorber D can be arbitrarily set in accordance with a flow passage resistance of the first valve element, a spring constant of the first spring S1, and the cross-sectional area of the first free piston F1. Similarly, setting of a damping force characteristic in the contraction side of the shock absorber D can be arbitrarily set in accordance with a flow passage resistance of the second valve element, a spring constant of the second spring S2, and the cross-sectional area of the second free piston F2.

Then, in the shock absorber D, the first bypass passage B1, the first pressure chamber PR1, the first free piston F1, and the first spring S1 are disposed for the extension-side damping valve EV, which provides the extension-side damping force, so as to ensure bypassing the extension-side damping valve EV and the second bypass passage B2, the second pressure chamber PR2, the second free piston F2, and the second spring S2 are disposed for the contraction-side damping valve CV, which provides the contraction-side damping force, so as to ensure bypassing the contraction-side damping valve CV. Accordingly, in the shock absorber D, both the flow rates of the flow rate of the liquid that flows in the extension-side damping valve EV, which provides the damping force in the extension operation, and the flow rate of the liquid that flows in the contraction-side damping valve CV, which provides the damping force in the contraction operation, can be decreased in response to the frequency. Accordingly, in the shock absorber D, even when the contraction operation is performed by the input of the high frequency vibration, a sufficient damping force reduction effect can be obtained and the reduction quantity of the contraction-side damping force can be increased.

In the shock absorber D, the first valve element is disposed in the first bypass passage B1 and the second valve element is disposed in the second bypass passage B2. This ensures arbitrarily setting each of frequencies with which the damping force reduction effects in the extension side and the contraction side of the shock absorber D can be obtained. In the shock absorber D, the first check valve 16 is disposed in parallel with the first valve element in the first bypass passage B1 and the second check valve 25 is disposed in parallel with the second valve element in the second bypass passage B2. The first check valve 16 opens when the first free piston F1 displaces to the first upper chamber UR1 side in the contraction operation of the shock absorber D to function such that the first valve element does not obstruct the displacement of the first free piston F1. The second check valve 25 opens when the second free piston F2 displaces to the second upper chamber UR2 side in the extension operation of the shock absorber D to function such that the second valve element does not obstruct the displacement of the second free piston F2. Accordingly, as soon as the shock absorber D contracts, the first free piston F1 is returned to the neutral position and as soon as the shock absorber D extends, the second free piston F2 is returned to the neutral position. This prevents the first free piston F1 from being biased to the first lower chamber LR1 side with respect to the neutral position and prevents the second free piston F2 from being biased to the second lower chamber LR2 side with respect to the neutral position. Here, in the case where the first free piston F1 is biased to the first lower chamber LR1 side with respect to the neutral position, a maximum permitted displacement amount that the first free piston F1 is displaceable to the first lower chamber LR1 side decreases. In the case where the second free piston F2 is biased to the second lower chamber LR2 side with respect to the neutral position, a maximum permitted displacement amount that the second free piston F2 is displaceable to the second lower chamber LR2 side decreases. Then, when the first free piston F1 reaches a stroke end where the first lower chamber LR1 is most compressed, the effect of reducing the extension-side damping force of the shock absorber D is lost. Similarly, when the second free piston F2 reaches a stroke end where the second lower chamber LR2 is most compressed, the effect of reducing the contraction-side damping force of the shock absorber D is lost. In contrast to this, disposing the first check valve 16 and the second check valve 25 ensures preventing biases of the first free piston F1 and the second free piston F2; therefore, the shock absorber D can surely provide the damping force reduction effect when extending and contracting in the high frequency. That is, in the shock absorber D, the first valve element and the first check valve 16 are disposed in parallel in the first bypass passage B1 and the second valve element and the second check valve 25 are disposed in parallel in the second bypass passage B2, thereby ensuring settings of the frequencies in both the extension and contraction sides with which the damping force reduction effect is provided and ensuring surely reducing the damping force. It should be noted that when it is possible to cause the frequency with which the damping force reduction effect is provided by the flow passage resistance in the first bypass passage B1 to be a desired frequency without disposing the first valve element, the first valve element can be omitted. The second valve element can also be similarly omitted. Even though the first check valve 16 and the second check valve 25 are omitted, the damping force can be reduced; therefore, these may be omitted.

Furthermore, the shock absorber D includes the contraction-side check valve 9 disposed in parallel with the extension-side damping valve EV and the check valve for suction 12 disposed in parallel with the contraction-side damping valve CV. In the shock absorber D, the extension-side damping force is reduced by the first bypass passage B1 corresponding to the extension-side damping valve EV, which provides the extension-side damping force, and the contraction-side damping force is reduced by the second bypass passage B2 corresponding to the contraction-side damping valve CV, which provides the contraction-side damping force. Accordingly, the shock absorber D ensures separately and independently set the setting of the extension-side damping force and its reduction effect, and the setting of the contraction-side damping force and its reduction effect.

### <Second Embodiment>

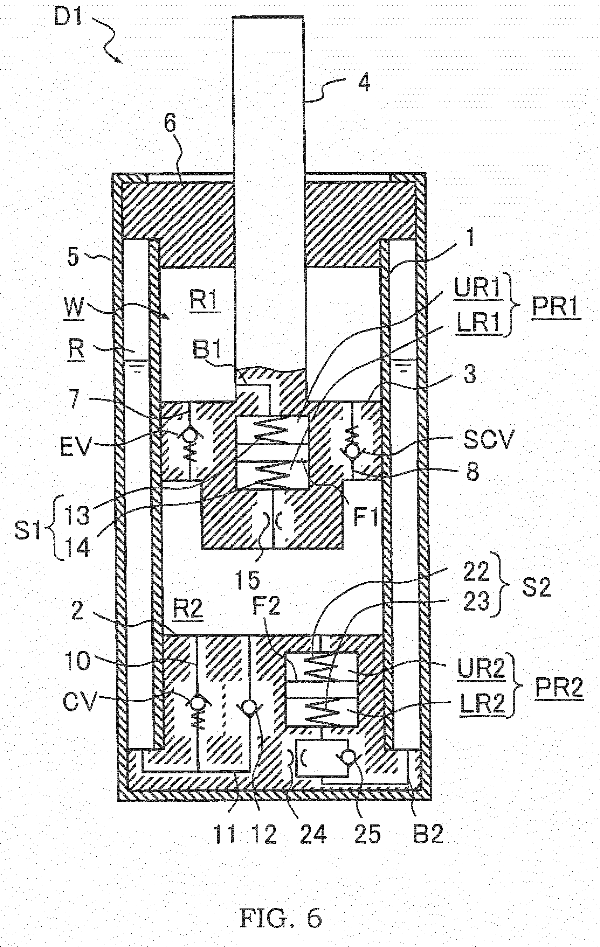

As illustrated in FIG. 6, a shock absorber D1 according to the second embodiment includes a contraction-side sub damping valve SCV that provides a resistance to the flow of the liquid heading for the extension-side chamber R1 from the contraction-side chamber R2 instead of the contraction-side check valve 9 in the shock absorber D according to the above-described first embodiment. The contraction-side sub damping valve SCV is disposed in parallel with the extension-side damping valve EV. In the shock absorber D1, the first check valve 16 is abolished. That is, the first bypass passage B1 serves as a bypass path not only to bypass the extension-side damping valve EV when the shock absorber D1 is in the extension operation state by permitting the move of a part of the liquid heading for the contraction-side chamber R2 from the extension-side chamber R1 by the displacement of the first free piston F1, but also to bypass the contraction-side sub damping valve SCV when the shock absorber D1 is in the contraction operation state.

For details, the first free piston F1 is positioned at the neutral position by the springs 13 and 14 as the first spring S1. While the first free piston F1 displaces to the first lower chamber LR1 side when the shock absorber D1 is in the extension operation, the first free piston F1 displaces to the first upper chamber UR1 side when the shock absorber D1 is in the contraction operation. The first spring S1 provides the biasing force with respect to the displacement of the first free piston F1 to both the upper and lower sides from the neutral position to suppress the displacement.

When the shock absorber D1 is in the extension operation state, the liquid does not pass through the contraction-side sub damping valve SCV; therefore, the contraction-side sub damping valve SCV is not involved in the generation of the damping force when the shock absorber D1 is in the extension operation. Accordingly, when the shock absorber D1 performs the extension operation, the shock absorber D1 operates similarly to when the shock absorber D according to the above-described first embodiment performs the extension operation, and provides the high extension-side damping force with respect to an input of a low frequency vibration and provides the low extension-side damping force with respect to an input of a high frequency vibration.

When the shock absorber D1 is in the contraction operation state where the piston 3 moves downward in FIG. 6 with respect to the cylinder 1, the piston 3 compresses the contraction-side chamber R2 and the extension-side chamber R1 is enlarged. The liquid moves to the extension-side chamber R1 from the contraction-side chamber R2, which is compressed, through the contraction-side sub damping valve SCV. At this time, the piston rod 4 moves into the cylinder 1 and the liquid of the moved in volume of the piston rod 4 is excessive. The liquid of this excessive amount is discharged to the reservoir R through the contraction-side damping valve CV. Accordingly, in the shock absorber D1, the pressure in the contraction-side chamber R2 is increased by the contraction-side damping valve CV and the contraction-side sub damping valve SCV in the contraction operation to generate a difference between the pressure in the contraction-side chamber R2 and the pressure in the extension-side chamber R1. Thus, in comparison with the shock absorber D according to the above-described first embodiment where the pressures in the extension-side chamber R1 and the contraction-side chamber R2 are equal pressures in the contraction operation, the shock absorber D1 ensures providing a further large contraction-side damping force by increasing the pressure in the contraction-side chamber R2 larger than the pressure in the extension-side chamber R1 and improving a responsiveness to generate the contraction-side damping force.

Thus, even though the contraction-side sub damping valve SCV is disposed, the first free piston F1 displaces in a direction to compress the first upper chamber UR1 and the first spring S1 suppresses this displacement when the shock absorber D1 is in the contraction operation; therefore, the liquid can pass through the first bypass passage B1 bypassing the contraction-side sub damping valve SCV. Then, with respect to the input of the high frequency vibration when the shock absorber D1 is in the contraction operation, a proportion of the flow rate that passes through the first bypass passage B1 increases compared with the flow rate that passes through the contraction-side sub damping valve SCV. That is, when the high frequency vibration is input, the differential pressure between the contraction-side chamber R2 and the extension-side chamber R1 decreases compared with that of when the low frequency vibration is input. Accordingly, when the vibration with high frequency is input to the shock absorber D1 and the contraction operation is performed, the damping force reduction effect by the second bypass passage B2 and the damping force reduction effect by the first bypass passage B1 can be obtained; therefore, the contraction-side damping force when the high frequency vibration is input can be decreased compared with when the low frequency vibration is input.

Accordingly, the shock absorber D1 ensures not only setting the large contraction-side damping force and improving the responsiveness to generate the contraction-side damping force, but also obtaining a sufficient effect to reduce the contraction-side damping force, thereby ensuring a large reduction quantity of the contraction-side damping force.

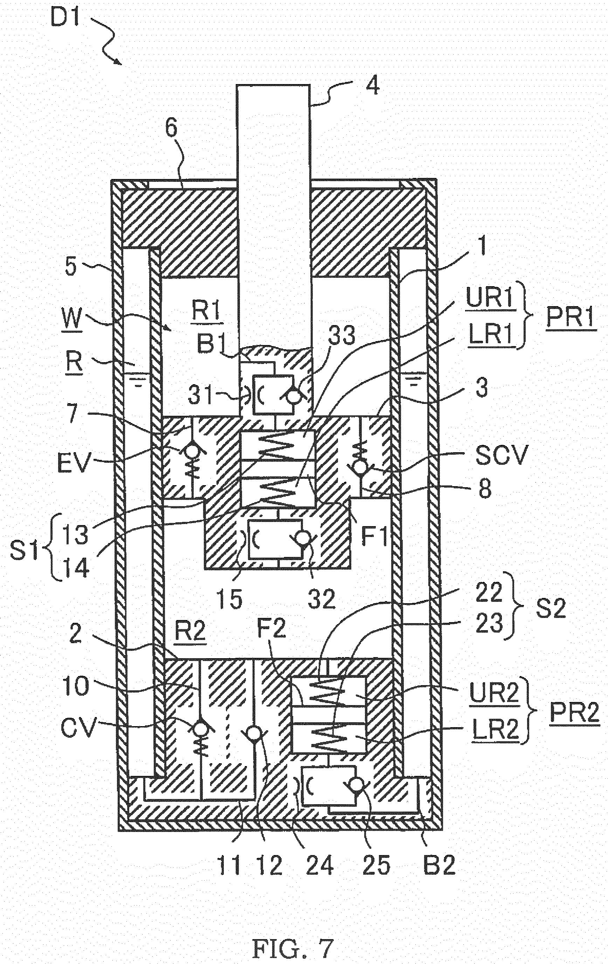

It should be noted that the first valve element in the first bypass passage B1 is the orifice 15 and is one of the elements that determines the displacement amount of the first free piston F1 in both the extension and contraction side of the shock absorber D1. As illustrated in FIG. 7, the first valve element may be the orifice 15 and an orifice 31 disposed in series in the first bypass passage B1, a first contraction-side check valve 32 that allows only the flow of the liquid heading for the extension-side chamber R1 from the contraction-side chamber R2 may be disposed in parallel with the orifice 15 in the first bypass passage B1, and a first extension-side check valve 33 that allows only the flow of the liquid heading for the contraction-side chamber R2 from the extension-side chamber R1 may be disposed in parallel with the orifice 31.

In this way, when the first free piston F1 moves in a direction to compress the first lower chamber LR1, only the orifice 15 effectively functions and when the first free piston F1 moves in a direction to compress the first upper chamber UR1, only the orifice 31 effectively functions. Accordingly, the respective displacement amounts of the first free piston F1 can be separately tuned for the extension operation and the contraction operation of the shock absorber D1. As a result, the frequency with which the damping force reduction effect can be obtained in the extension operation and the frequency with which the damping force reduction effect can be obtained in the contraction operation can be separately set.

The following summarizes configurations, actions, and effects according to the embodiments of the present invention.

The shock absorber includes the first bypass passage, the first pressure chamber, the first free piston, and the first spring for the extension-side damping valve, which provides the extension-side damping force, to ensure the liquid bypassing the extension-side damping valve and includes the second bypass passage, the second pressure chamber, the second free piston, and the second spring for the contraction-side damping valve, which provides the contraction-side damping force, to ensure the liquid bypassing the contraction-side damping valve. Accordingly, in the shock absorber, both the flow rates of the flow rate of the liquid that flows in the extension-side damping valve, which provides the damping force in the extension operation, and the flow rate of the liquid that flows in the contraction-side damping valve, which provides the damping force in the contraction operation, can be decreased in response to the frequency.

In the shock absorber, the first valve element and the first check valve are disposed in parallel in the first bypass passage and the second valve element and the second check valve are disposed in parallel in the second bypass passage. In view of this, the frequencies with which the damping force reduction effects are provided in both the extension and contraction sides can be separately set and the damping force reduction effects in both the extension and contraction sides can be surely provided.

The shock absorber includes the contraction-side check valve disposed in parallel with the extension-side damping valve and the check valve for suction disposed in parallel with the contraction-side damping valve. In view of this, each of the setting of the extension-side damping force and its reduction effect and the setting of the contraction-side damping force and its reduction effect can be separately set.

The shock absorber further includes the contraction-side sub damping valve that is disposed in parallel with the extension-side damping valve and provides the resistance to the flow of the liquid heading for the extension-side chamber from the contraction-side chamber. In view of this, the large contraction-side damping force can be set and the responsiveness to generate the contraction-side damping force can be improved. The effect to reduce the contraction-side damping force can be sufficiently obtained, thereby ensuring increasing the reduction quantity of the contraction-side damping force.

Embodiments of the present invention were described above, but the above embodiments are merely examples of applications of the present invention, and the technical scope of the present invention is not limited to the specific constitutions of the above embodiments.

This application claims priority based on Japanese Patent Application No. 2015-172503 filed with the Japan Patent Office on September 2, 2015, the entire contents of which are incorporated into this specification by reference.

## Claims

1. A shock absorber comprising:
a cylinder;
a reservoir;
a separating member that defines an operation chamber in the cylinder, the separating member separating the operation chamber from the reservoir;
a piston movably inserted in the cylinder to partition the operation chamber into an extension-side chamber and a contraction-side chamber;
an extension-side damping valve configured to provide a resistance to a flow of a liquid heading for the contraction-side chamber from the extension-side chamber;
a first bypass passage configured to bypass the extension-side damping valve;
a first pressure chamber disposed in a middle of the first bypass passage;
a first free piston movably inserted in the first pressure chamber;
a first spring configured to bias the first free piston;
a contraction-side damping valve configured to provide a resistance to a flow of the liquid heading for the reservoir from the contraction-side chamber;
a second bypass passage configured to bypass the contraction-side damping valve;
a second pressure chamber disposed in a middle of the second bypass passage;
a second free piston movably inserted in the second pressure chamber; and
a second spring configured to bias the second free piston.

2. The shock absorber according to claim 1, further comprising:
a first valve element disposed in a middle of the first bypass passage, the first valve element being configured to provide a resistance to the flow of the liquid heading for the contraction-side chamber from the extension-side chamber;
a first check valve disposed in parallel with the first valve element in a middle of the first bypass passage, the first check valve being configured to allow only a flow of the liquid heading for the extension-side chamber from the contraction-side chamber;
a second valve element disposed in a middle of the second bypass passage, the second valve element being configured to provide a resistance to the flow of the liquid heading for the reservoir from the contraction-side chamber; and
a second check valve disposed in parallel with the second valve element in a middle of the second bypass passage, the second check valve being configured to allow only a flow of the liquid heading for the contraction-side chamber from the reservoir.

3. The shock absorber according to claim 1, further comprising:
two orifices disposed in series in a middle of the first bypass passage;
a first extension-side check valve disposed in parallel with one of the respective orifices in a middle of the first bypass passage, the first extension-side check valve being configured to allow only the flow of the liquid heading for the contraction-side chamber from the extension-side chamber;
a first contraction-side check valve disposed in parallel with the other of the respective orifices in a middle of the first bypass passage, the first contraction-side check valve being configured to allow only a flow of the liquid heading for the extension-side chamber from the contraction-side chamber;
a second valve element disposed in a middle of the second bypass passage, the second valve element being configured to provide a resistance to the flow of the liquid heading for the reservoir from the contraction-side chamber; and
a second check valve disposed in parallel with the second valve element in a middle of the second bypass passage, the second check valve being configured to allow only a flow of the liquid heading for the contraction-side chamber from the reservoir.

4. The shock absorber according to claim 1, further comprising:
a contraction-side check valve disposed in parallel with the extension-side damping valve, the contraction-side check valve being configured to allow only a flow of the liquid heading for the extension-side chamber from the contraction-side chamber; and
a check valve for suction disposed in parallel with the contraction-side damping valve, the check valve for suction being configured to allow only a flow of the liquid heading for the contraction-side chamber from the reservoir.

5. The shock absorber according to claim 1, further comprising:
a contraction-side sub damping valve disposed in parallel with the extension-side damping valve, the contraction-side sub damping valve being configured to provide a resistance to a flow of the liquid heading for the extension-side chamber from the contraction-side chamber.
